# EUROPEAN PATENT SPECIFICATION

(11) **EP 3 499 483 B1**
(45) Date of publication and mention of the grant of the patent: **20.11.2024**
(21) Application number: 17839175.1
(22) Date of filing: 20.07.2017
(51) Int. Cl.: G08G 1/16, B60W 30/16, B60W 40/02, G01B 21/00, G01S 13/86, G01S 13/93, G01S 17/89, B60W 30/08, G01S 13/931, G01S 17/42, G01S 17/931, G01S 17/86

(54) **OBJECT DETECTION DEVICE AND VEHICLE CONTROL SYSTEM COMPRISING OBJECT DETECTION DEVICE**
OBJEKTERKENNUNGSVORRICHTUNG UND FAHRZEUGSTEUERUNGSSYSTEM MIT EINER OBJEKTERKENNUNGSVORRICHTUNG
DISPOSITIF DE DÉTECTION D'OBJET ET SYSTÈME DE COMMANDE DE VÉHICULE COMPRENANT LE DISPOSITIF DE DÉTECTION D'OBJET

(30) Priority: 08.08.2016 JP 2016155811
(43) Date of publication of application: 19.06.2019
(73) Proprietor: Hitachi Astemo, Ltd., Hitachinaka-shi, Ibaraki 312-8503 (JP)
(72) Inventor: ENOMOTO, Yoshiaki, Hitachinaka-shi Ibaraki 312-8503 (JP); MUTO, Yuta, Hitachinaka-shi Ibaraki 312-8503 (JP)
(74) Representative: MERH-IP Matias Erny Reichl Hoffmann Patentanwälte PartG mbB
(86) International application number: PCT/JP2017/026235
(87) International publication number: WO 2018/030102

(56) References cited:
- JP-A- 2010 191 780
- US-A1- 2005 012 604
- US-B2- 7 142 150
- KAI SCHUELER ET AL: "360 Degree multi sensor fusion for static and dynamic obstacles", INTELLIGENT VEHICLES SYMPOSIUM (IV), 2012 IEEE, IEEE, 3 June 2012 (2012-06-03), pages 692 - 697, XP032453044, ISBN: 978-1-4673-2119-8, DOI: 10.1109/IVS.2012.6232253

## Description

### Technical Field

The present invention relates to an object detection device that monitors the periphery of a vehicle and calculates a vehicle length of another vehicle detected in the surroundings of the vehicle; and a vehicle control system including the object detection device.

### Background Art

In automatic driving/driving support system, when a merging vehicle (for example, another vehicle traveling on a merging lane while the vehicle is traveling on a main line and another vehicle traveling on a main line while the vehicle is traveling on a merging lane) is observed at a merging section, smooth merging is supported while the inter-vehicle distance between the vehicle and a preceding vehicle is controlled.

Incidentally, in the automatic driving/driving support system, when the vehicle and a merging vehicle are traveling side by side and the total length of the merging vehicle is unknown, there is a risk of danger at the time of merging without merging support (while no actions for merging are taken). Therefore, it is necessary to appropriately find out the total length of another vehicle in the periphery of the vehicle.

As a conventional technology for finding out an object present in the periphery of the vehicle, for example, an on-vehicle radar device disclosed in following PTL 1 is known. In this conventional on-vehicle radar device disclosed in PTL 1, the position of an object in the periphery of the vehicle is measured using a radar and the size of another vehicle is found out using a camera that photographs the periphery of the vehicle. Then, in this technology, a grouped region for each position measured for single another vehicle and a grouped region having measurements designated according to the size of the another vehicle are grouped into a group for each equal position, whereby the accuracy of finding out another vehicle in the periphery of the vehicle is improved. PTL 2 describes a vehicle obstacle detecting device which includes at least first and second sensors arranged such that sensing scopes of the first and second sensors do not substantially overlap. The vehicle obstacle detecting device is configured to observe the behavior of an obstacle existing within the sensing scope of one of the first and second sensors and predict the blind spot behavior of the obstacle in a blind spot between the sensing scopes of the first and second sensors based on the observed behavior of the obstacle.

### Citation List

### Patent Literature

PTL 1: JP 2007-212418 A
PTL 2: US 2005/012604 A1

Further, US-7.142.150-B2 describes to combine laser data and radar data in an occupancy grid. Object boundaries and dimensions are determined. Still further, "360 Degree multi sensor fusion for static and dynamic obstacles" (INTELLIGENT VEHICLES SYMPOSIUM (IV), 2012 IEEE, IEEE, 3 June 2012 (2012-06-03), pages 692-697), describes a vehicle comprising multiple sensors for environment detection and using grid maps for object characterization. Objects are identified by detecting corners. Object dimensions are also determined.

### Summary of Invention

### Technical Problem

However, even for another vehicle located in a detection region in the periphery of the vehicle, a case where the entire vehicle can be detected within the detection region of a single sensor and a case where another vehicle can be detected by crossing the detection regions of a plurality of sensors are conceivable. In the conventional on-vehicle radar device disclosed in above-mentioned PTL 1, the same detection region is detected by a plurality of sensors (in this technology, detected by the radar and the camera) and the size such as the vehicle length of another vehicle located in this detection region is found out by a single sensor (camera). Accordingly, consideration is not given to another vehicle in the periphery that is detected across the detection regions of a plurality of sensors. For this reason, it is impossible to appropriately find out the vehicle length or the like of another vehicle that is present across the detection regions of the plurality of sensors.

In addition, in the periphery of the vehicle, there is a non-detection region (a region where an object cannot be detected by a sensor or the like mounted on the vehicle) other than the detection region and it is also conceivable that a part or whole of another vehicle in the periphery of the vehicle is located in this non-detection region. In the conventional technology disclosed in above-mentioned PTL 1, however, it is not possible to find out the vehicle length or the like of another vehicle present within such a non-detection region.

The present invention has been made in view of the above problems and it is an object of the present invention to provide an object detection device that can appropriately specify, or estimate, the presence region (the vehicle length or the like) of an object, such as another vehicle, that is present in the periphery of a vehicle; and a vehicle control system that includes the object detection device.

### Solution to Problem

The aforementioned object is solved by the invention according to the independent claims.

Further preferred developments are described by the dependent claims.

### Advantageous Effects of Invention

According to the present invention, by associating detection results for different detection regions in the surroundings of the vehicle, it is possible to appropriately specify or estimate the object presence region in which an object such as another vehicle in the periphery of the vehicle is present. In addition, by controlling the traveling state based on the object presence region (vehicle length information on another vehicle) specified or estimated by the object detection device, for example, determination on vehicle interrupting (being interrupted) at the time of merging during operation of the automatic driving/driving support system can be accurately judged.

Problems, configurations, and effects other than those mentioned above will be clarified by the description of the following embodiments.

### Brief Description of Drawings

[FIG. 1] FIG. 1 is a block configuration diagram of a first embodiment of an object detection device according to the present invention.
[FIG. 2] FIG. 2 is a plan view illustrating an example of a situation of detecting a target vehicle crossing a plurality of detection regions according to the first embodiment of the present invention.
[FIG. 3] FIG. 3 is an example of a detected matter integrated mapping diagram created by a detected matter integrated mapping unit of a physical value computation unit illustrated in FIG. 1.
[FIG. 4] FIG. 4 is an example of a recognized vehicle mapping diagram created by a recognized vehicle mapping unit of a vehicle length computation unit according to the invention.
[FIG. 5] FIG. 5 is a flowchart illustrating a processing flow by the object detection device illustrated in FIG. 1.
[FIG. 6] FIG. 6 is a plan view illustrating another example of a situation of detecting a target vehicle sandwiching a plurality of detection regions according to a second embodiment of the present invention.
[FIG. 7] FIG. 7 is an example of a detected matter integrated mapping diagram created by a detected matter integrated mapping unit of a physical value computation unit in the second embodiment of the object detection device according to the present invention.
[FIG. 8] FIG. 8 is a flowchart illustrating a processing flow of an entire vehicle recognition process by the second embodiment of the object detection device according to the present invention.
[FIG. 9] FIG. 9 is a plan view illustrating an example of an object presence possibility region in the periphery of a vehicle according to the second embodiment of the present invention.
[FIG. 10] FIG. 10 is a conceptual diagram illustrating a processing pattern (part 1) when a target vehicle is detected with a non-detection region sandwiched according to the second embodiment of the present invention.
[FIG. 11] FIG. 11 is a conceptual diagram illustrating a processing pattern (part 2) when target vehicles are detected with a non-detection region sandwiched according to the second embodiment of the present invention.
[FIG. 12] FIG. 12 is a conceptual diagram illustrating a processing pattern (part 3) when a target vehicle is detected with a non-detection region sandwiched according to the second embodiment of the present invention.
[FIG. 13] FIG. 13 is a conceptual diagram illustrating a processing pattern (part 4) when a target vehicle is detected with a non-detection region sandwiched according to the second embodiment of the present invention.
[FIG. 14] FIG. 14 is a conceptual diagram illustrating a processing pattern (part 5) when a target vehicle is detected with a non-detection region sandwiched according to the second embodiment of the present invention.
[FIG. 15] FIG. 15 is a conceptual diagram illustrating a processing pattern (part 6) when a target vehicle is detected with a non-detection region sandwiched according to the second embodiment of the present invention.
[FIG. 16] FIG. 16 is bird's eye views illustrating situations of travel control by a vehicle control system according to the present invention, where (A) is a diagram illustrating a situation in which another vehicle is merging from the rear side of a vehicle and (B) is a diagram illustrating a situation in which another vehicle is merging from the front side of a vehicle.
[FIG. 17] FIG. 17 is a flowchart illustrating a processing flow of travel control by the vehicle control system according to the present invention.

### Description of Embodiments

Hereinafter, embodiments according to the invention will be described with reference to the drawings.

### [First Embodiment of Object Detection Device]

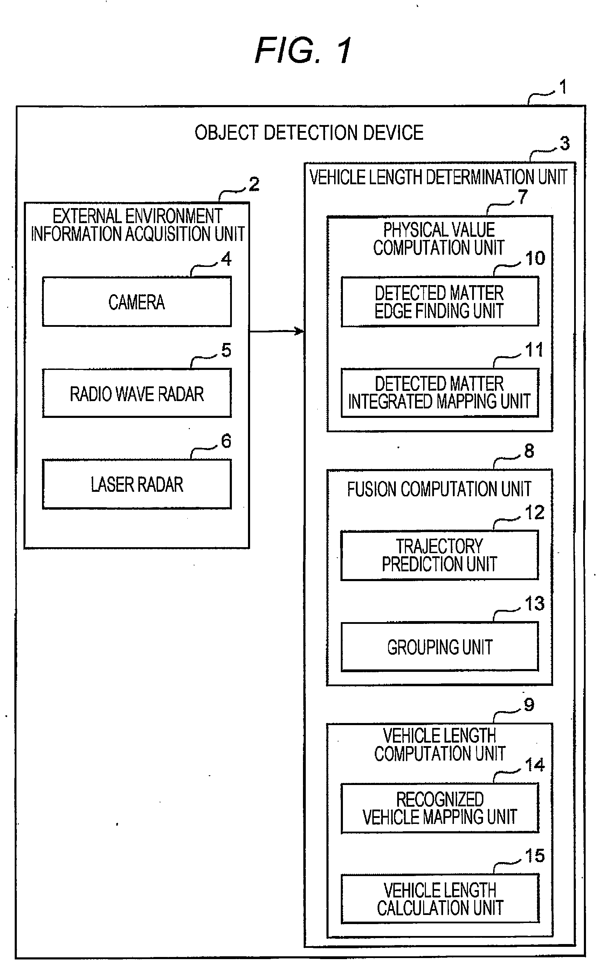

First, a first embodiment of an object detection device according to the present invention will be described with reference to FIGS. 1 to 5.

FIG. 1 illustrates a block configuration diagram of an object detection device according to the embodiment of the present invention.

The object detection device of the present embodiment is mounted on a vehicle that travels on a road and is used for accurately specifying or estimating a presence region (object presence region) for an object such as a detected vehicle (another vehicle) in the periphery of the vehicle.

In the following explanation, the object detection device according to the present embodiment will be described, which calculates the vehicle length of a detected vehicle (another vehicle) in the periphery of a vehicle.

As illustrated in FIG. 1, the object detection device 1 is constituted mainly by an external environment information acquisition unit 2 and a vehicle length determination unit (object presence region setting unit) 3 included therein.

The external environment information acquisition unit 2 is used for acquiring external environment information for different detection regions in the surroundings of the vehicle and constituted by a camera 4, a radio wave radar 5, a laser radar 6, and the like.

A stereo camera, a monocular camera, or a charge-coupled device (CCD) camera is used as the camera 4 and is equipped, for example, in the front of the vehicle, in the rear of the vehicle, and on the sides of the vehicle to image each predetermined range and find out image marker information.

The radio wave radar 5 is equipped, for example, on the left and right front and rear sides of the vehicle and transmits radio waves to predetermined ranges on the front and rear sides of the vehicle to receive reflected waves from objects on the front and rear sides, thereby finding out the relative position (distance, direction, and size in a horizontal direction) and the relative speed with respect to these objects on the front and rear sides (these pieces of information are referred to as radar marker information).

The laser radar 6 is equipped, for example, in the left and right front and rear of the vehicle and transmits laser light to predetermined ranges in the periphery of the vehicle to receive reflected light from objects in the periphery of the vehicle, thereby finding out the relative position (distance, direction, and size) and the relative speed with respect to these objects in the periphery of the vehicle (these pieces of information are referred to as radar marker information). In addition, since the laser radar 6 uses an electromagnetic wave having a wavelength much shorter than that of the radio wave radar 5, the laser radar 6 is characterized in having a higher three-dimensional size detection accuracy for a detected object but having a shorter detection distance. Therefore, it is possible to adopt a configuration in which the laser radar 6 is used together with the radio wave radar 5 as a complementary role of the radio wave radar 5, or a configuration in which the radio wave radar 5 is replaced with the laser radar 6.

Meanwhile, the vehicle length determination unit (object presence region setting unit) 3 is used for specifying or estimating an object presence region in which an object (another vehicle or a detected vehicle) is present or an object (another vehicle or a detected vehicle) may be present in the surroundings of the vehicle to calculate the length (vehicle length) of this object (another vehicle or a detected vehicle) in a front-rear direction. The vehicle length determination unit (object presence region setting unit) 3 is constituted mainly by a physical value computation unit 7, a fusion computation unit 8, and a vehicle length computation unit 9.

Based on the image marker information by the camera 4 acquired by the external environment information acquisition unit 2, the physical value computation unit 7 works out the distance and direction with respect to the detected vehicle and the edge (end portion) of the detected vehicle, using a detected matter edge finding unit 10. The edge (end portion) of the detected vehicle is also worked out based on the radar marker information by the radio wave radar 5 or the like. In addition, based on the information acquired by the external environment information acquisition unit 2 and the edge (end portion) of the detected vehicle worked out by the detected matter edge finding unit 10, the physical value computation unit 7 maps the detected vehicle on coordinates centered on the vehicle, using a detected matter integrated mapping unit 11.

Based on the information obtained by the physical value computation unit 7, the fusion computation unit 8 predicts the trajectory of a vehicle detected for each detection region of the external environment information acquisition unit 2, using a trajectory prediction unit 12 and also determines whether the vehicle detected for each detection region is the same vehicle, using a grouping unit 13.

With respect to a vehicle regarded as the same vehicle by the fusion computation unit 8, the vehicle length computation unit 9 maps the same vehicle on the coordinates centered on the vehicle (that is, specifies an object presence region in which the detected vehicle is present on the coordinates centered on the vehicle), using a recognized vehicle mapping unit 14 and computes the dimensions (vehicle length) between the front and rear edges (end portions) of this same vehicle based on the mapping coordinates, using a vehicle length calculation unit 15.

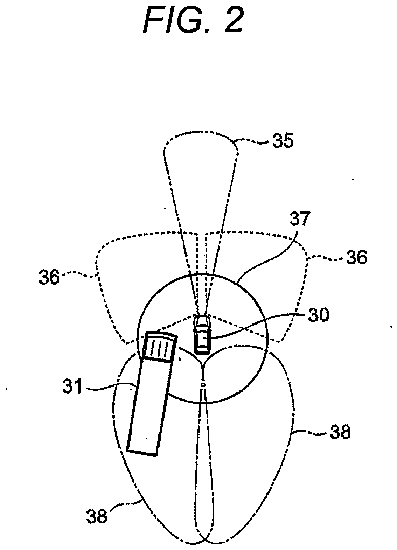

FIG. 2 illustrates a situation in which the external environment information acquisition unit 2 of the object detection device 1 detects another vehicle in the periphery and particularly illustrates a situation in which a target vehicle (detected vehicle) crossing a plurality of detection regions is detected.

In this embodiment of the invention a vehicle 30 is mounted with the camera 4 and the radio wave radar 5. The camera 4 is attached to the front of the vehicle and a region 35 in front of the vehicle is settled as a detection region of the camera 4. In addition, wide angle cameras 4 are attached to the front, rear, left, and right of the vehicle 30 and a region 37 for detecting around 360 degrees of the periphery of the vehicle (a predetermined range thereof) is settled as a detection region of these wide angle cameras 4. Likewise, the radio wave radar 5 is attached to each of the front, rear, left, and right end portions of the vehicle 30 and regions 36 for detecting in a front side area and regions 38 for detecting in a rear side area are settled as detection regions of these radio wave radars 5. For example, when a target vehicle 31 is present on the left side, the entire target vehicle 31 is detected in the detection region 37 of the wide angle cameras 4 and the detection region 38 of the radio wave radar 5 on the left rear side.

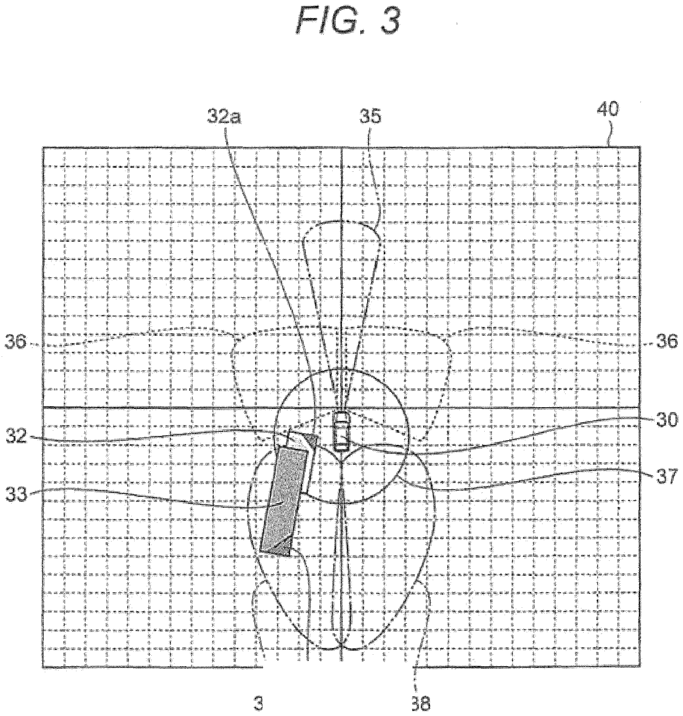

FIG. 3 illustrates an example of a detected matter integrated mapping diagram 40 according to the first embodiment of the present invention in which pieces of information individually detected in a plurality of detection regions (in this example, the detection region 37 of the wide angle cameras 4 and the detection region 38 of the radio wave radar 5) for the target vehicle 31 depicted in FIG. 2 are mapped on the coordinates centered on the vehicle 30 by the detected matter integrated mapping unit 11 of the physical value computation unit 7. This example of the detected matter integrated mapping diagram 40 here is expressed by two-dimensional coordinates in longitudinal and lateral directions with a front center portion of the vehicle 30 as the center point. Information detected in the detection region 37 of the wide angle cameras 4 (in other words, an object presence region of the target vehicle 31 in the detection region 37) is indicated as a detected target vehicle 32, whereas information detected in the detection region 38 of the radio wave radar 5 on the left rear side (in other words, an object presence region of the target vehicle 31 in the detection region 38) is indicated as a detected target vehicle 33. In addition, as information on the detected target vehicles 32 and 33 in the detection regions 37 and 38, edge portions (end points) are indicated as 32a and 33a, respectively. Generally, at this stage, a deviation occurs between the detected target vehicles 32 and 33.

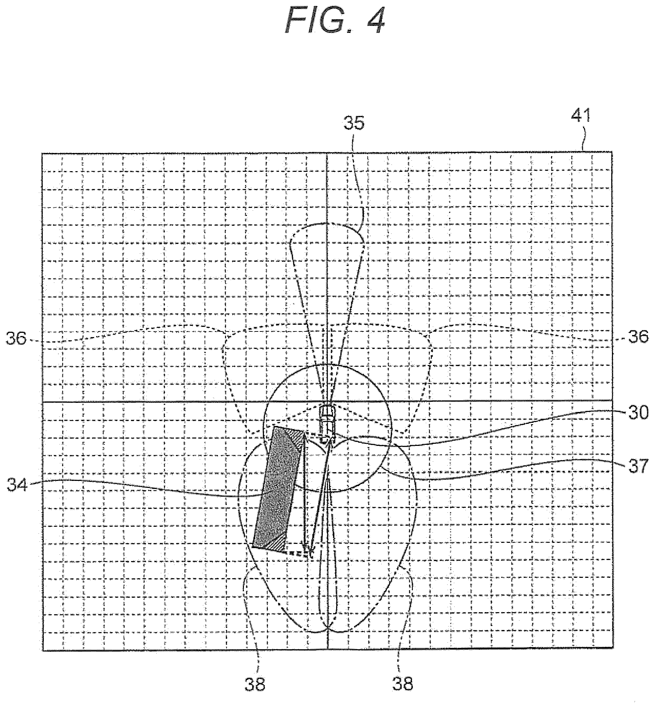

FIG. 4 illustrates an example of a recognized vehicle mapping diagram 41 according to the first embodiment of the present invention in which the recognized vehicle mapping unit 14 of the vehicle length computation unit 9 maps, on the coordinates centered on the vehicle 30, a target vehicle (= object presence region) 34 obtained by grouping the target vehicle detected across the plurality of detection regions illustrated in FIG. 3 as the same vehicle estimated by the fusion computation unit 8, by trajectory prediction according to each detection region. This target vehicle 34 has information on the edge portions (end points) at the front and rear of the vehicle, such that the vehicle length calculation unit 15 of the vehicle length computation unit 9 can calculate the vehicle length of the target vehicle 34 (the length of the target vehicle in the front-rear direction or the length of the target vehicle in a direction parallel to the front-rear direction of the vehicle) by computing a distance between coordinates of the respective edge portions (end points) on the coordinates of the recognized vehicle mapping diagram 41.

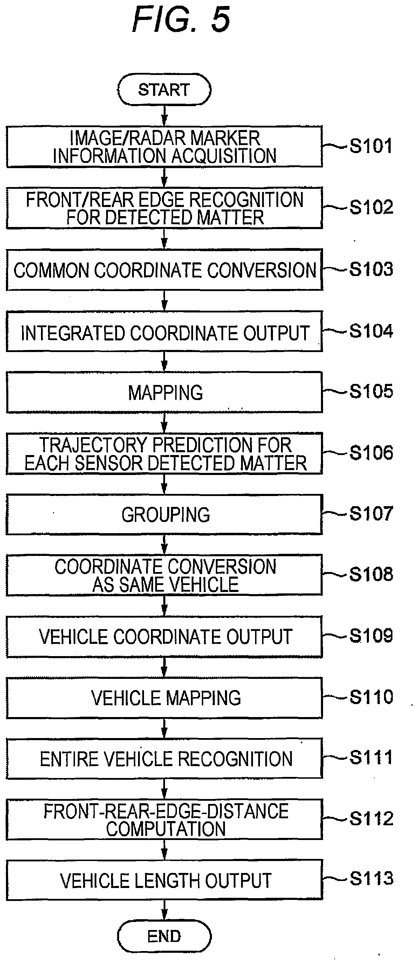

FIG. 5 illustrates a processing flow of a series of these processes (processes by the object detection device 1) .

In an image/radar marker information acquisition process S101, detection information (image/radar marker information) for different detection regions in the surroundings of the vehicle is obtained from a plurality of sensors (the camera 4, the radio wave radar 5, and the like) of the external environment information acquisition unit 2. This image/radar marker information includes measurements, a distance, a relative speed, a bearing, a boundary line, a radio wave strength, and the like of a detected matter in each detection region.

In a front/rear edge recognition process S102 for the detected matter, the edge portion (end point) of the detected matter in each detection region is recognized based on the image/radar marker information acquired in the image/radar marker information acquisition process S101. For example, for the camera 4, the edge portion of the detected vehicle is recognized by combinations of longitudinal edges and pattern matching of the vehicle based on the captured images. In addition, for the radio wave radar 5, a transmission beam width is narrowed for the detected matter when an object is detected within the detection region and the edge portion is recognized by the radio wave reflection intensity for the detected vehicle (detected matter).

In a common coordinate conversion process S103, range and azimuth (angle) information from the image/radar marker information acquired in the image/radar marker information acquisition process S101 and the position of the edge portion recognized in the front/rear edge recognition process S102 for the detected matter are converted into longitudinal and lateral two-dimensional coordinates with the vehicle as the center point. In an integrated coordinate output process S104, the longitudinal and lateral two-dimensional coordinates converted in the common coordinate conversion process S103 are collectively output as integrated coordinates.

In a mapping process S105, the detection information from each detection region converted in the common coordinate conversion process S103 and collected as integrated coordinates in the integrated coordinate output process S104 is mapped (refer to the detected matter integrated mapping diagram in FIG. 3).

In a trajectory prediction process S106 for each sensor detected matter, the trajectory of the detected matter in each detection region by the mapping process S105 is estimated based on the history of the accumulated previous image/radar marker information.

In a grouping process S107, using the detection information from each detection region collected as integrated coordinates in the integrated coordinate output process S104 and information for the detected matter trajectory in each detection region estimated in the trajectory prediction process S106 for each sensor detected matter, clustering and grouping are performed to make estimation as the same vehicle.

In a coordinate conversion process S108 as the same vehicle, information obtained by estimating markers (detected matters) that have been separately detected in a plurality of detection regions as the same vehicle in the grouping process S107 is converted into longitudinal and lateral two-dimensional coordinates with the vehicle as the center point. In a vehicle coordinate output process S109, the longitudinal and lateral two-dimensional coordinates converted in the coordinate conversion process S108 as the same vehicle are output as vehicle coordinates.

In a vehicle mapping process S110, the vehicle coordinates converted in the coordinate conversion process S108 as the same vehicle and output in the vehicle coordinate output process S109 are mapped (refer to the recognized vehicle mapping diagram in FIG. 4).

In an entire vehicle recognition process Sill, if a vehicle mapped to the vehicle coordinates in the vehicle mapping process S110 is a continuous marker including the information on the front and rear edge portions (end points), it is assumed that the entire vehicle is recognized.

In a front-rear-edge-distance computation process S112, a distance between coordinates of the front and rear edge portions (end points) is computed with the coordinates by the vehicle mapping process S110 for the target vehicle, for which the entire vehicle has been recognized in the entire vehicle recognition process S111. In a vehicle length output process S113, a calculation result of the front-rear-edge-distance computation process S112 is output as the vehicle length of the target vehicle.

Note that the above embodiment has described the case of calculating the vehicle length of another vehicle (detected vehicle) detected across different detection regions. However, of course it is also possible to similarly calculate the vehicle length of a detected vehicle accommodated within a single detection region when detected.

By repeating a series of these processes, the vehicle length can be calculated for a detected vehicle detected in the periphery of the vehicle.

As described thus far, according to the object detection device 1 of the present first embodiment, by associating detection results from the external environment information acquisition unit 2 for different detection regions in the surroundings of the vehicle, it is possible to appropriately specify an object presence region in which an object such as another vehicle detected in the periphery of the vehicle is present and appropriately calculate the vehicle length and the like of the another vehicle.

### [Second Embodiment of Object Detection Device]

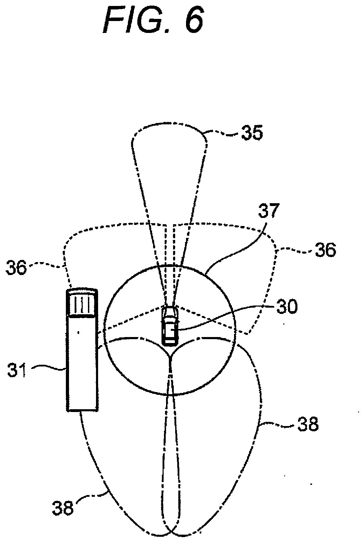

Next, a second embodiment of the object detection device according to the present invention will be described with reference to FIGS. 6 to 15.

The present second embodiment is different from the first embodiment described above in the configuration pertinent to the vehicle length determination unit 3 in the block configuration diagram of the object detection device 1 in FIG. 1, in detail, the configuration pertinent to the entire vehicle recognition process S111 in the processing flow of the object detection device 1 in FIG. 5, and the other configurations are approximately the same as those of the first embodiment described above. Therefore, the same reference numerals are given to the same configurations as those of the first embodiment described above and the detailed description thereof will be omitted. Only the differences will be described in detail below.

In the first embodiment described above, in the entire vehicle recognition process S111 in the processing flow in FIG. 5, it is assumed that the entire vehicle is recognized if a mapped marker is a continuous marker including the information on the front and rear edge portions (end points) ; then, a distance between coordinates of the front and rear edge portions (end points) is computed in the front-rear-edge-distance computation process S112 and a calculation result thereof is output as the vehicle length in the vehicle length output process S113.

In the present second embodiment, it is supposed that, in the above-described entire vehicle recognition process S111, an object presence region in which an object such as another vehicle is present or an object may be present in the surroundings of the vehicle is specified or estimated and the vehicle length of the another vehicle is estimated and calculated mainly in the following cases.
(1) A case where the information on the front and rear edge portions (end points) is included and there is an undetected section between the front and rear edge portions (end points) of a discontinuous marker, that is, the detected target vehicle.
(2) A case where, with regard to a marker having information on only one of the front and rear edge portions (end points), the other edge portion (end point) of the detected target vehicle is present in an area (non-detection region) between multiple detection regions of a plurality of sensors (a camera 4, a radio wave radar 5, and the like) constituted in an external environment information acquisition unit 2.
(3) A case where the target vehicle is not present (not detected) in any detection region by a plurality of sensors (the camera 4, the radio wave radar 5, and the like) constituted in the external environment information acquisition unit 2. In other words, a case where the target vehicle is present in a non-detection region between multiple detection regions, or the target vehicle is not present in any detection region or non-detection region.

Note that the block configuration of the object detection device 1 of the present second embodiment is the same as the block configuration of the object detection device 1 of the first embodiment described with reference to FIG. 1.

FIG. 6 illustrates a situation in which the external environment information acquisition unit 2 of the object detection device 1 detects another vehicle and particularly illustrates a situation in which a target vehicle (detected vehicle) crossing a plurality of detection regions with a non-detection region sandwiched therebetween is detected.

As described earlier, the configuration of the external environment information acquisition unit 2 constituting the object detection device 1 is the same as that of the first embodiment, in which, with the vehicle 30 as the center, the camera 4 is attached to the front of a vehicle 30, a region 35 in front of the vehicle is settled as a detection region of this camera 4, wide angle cameras 4 are attached to the front, rear, left, and right of the vehicle 30, and a region 37 for detecting around 360 degrees of the periphery of the vehicle (a predetermined range thereof) is settled as a detection region of these wide angle cameras 4. Likewise, the radio wave radar 5 is attached to each of the front, rear, left, and right end portions of the vehicle 30 and regions 36 for detecting in a front side area and regions 38 for detecting in a rear side area are settled as detection regions of these radio wave radars 5. For example, when a target vehicle 31 is present on the left side, a front portion of the target vehicle 31 is detected in the detection region 36 of the radio wave radar 5 on the left front side and a rear portion of the target vehicle 31 is detected in the detection region 38 of the radio wave radar 5 on the left rear side. In this example, the target vehicle 31 is located outside the detection region of the detection region 37 of the wide angle cameras 4 (on the outside of the detection region 37 of the wide angle cameras 4) and an intermediate portion (a portion between the front portion and the rear portion) of the target vehicle 31 is present between the detection region 36 and the detection region 38 of the radio wave radars 5 on the front and rear sides on the outside of the detection region 37 of the wide angle cameras 4. Accordingly, a part (the front portion and the rear portion) of the target vehicle sandwiching the plurality of detection regions is detected and a part (intermediate portion) thereof is not detected.

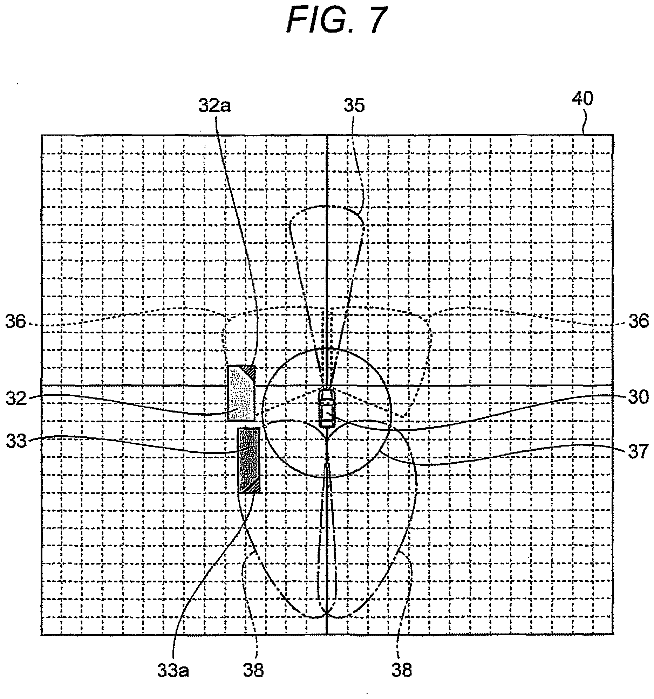

FIG. 7 illustrates an example of a detected matter integrated mapping diagram 40 according to the second embodiment of the present invention, in which pieces of information individually detected in a plurality of detection regions (in this example, the detection region 36 and the detection region 38 of the radio wave radars 5) for the target vehicle 31 depicted in FIG. 6 are mapped on coordinates centered on the vehicle 30 by a detected matter integrated mapping unit 11 of a physical value computation unit 7 of a vehicle length determination unit 3. As in the case of FIG. 3 of the first embodiment described above, this example of a detected matter integrated mapping diagram 40 is expressed by two-dimensional coordinates in longitudinal and lateral directions with a front center portion of the vehicle 30 as the center point. Information detected in the detection region 36 of the radio wave radar 5 on the left front side (in other words, a rectangular object presence region of the target vehicle 31 relating to the detection region 36) is indicated as a detected target vehicle 32, whereas information detected in the detection region 38 of the radio wave radar 5 on the left rear side (in other words, a rectangular object presence region of the target vehicle 31 relating to the detection region 38) is indicated as a detected target vehicle 33. In addition, as information on the detected target vehicles 32 and 33 in the detection regions 36 and 38, edge portions (end points) are indicated as 32a and 33a, respectively.

Note that, in this case, even if the trajectory prediction and the grouping according to each detection region are performed by a fusion computation unit 8 (a trajectory prediction unit 12 and a grouping unit 13 thereof), there is a high possibility that a deviation has occurred between the detected target vehicles 32 and 33 mapped by a recognized vehicle mapping unit 14 of a vehicle length computation unit 9.

As described above, in in FIGS. 6 and 7, only the front portion and the rear portion of the target vehicle 31 are detected with the non-detection region sandwiched, as the detected target vehicle 32 and the detected target vehicle 33 that have been mapped.

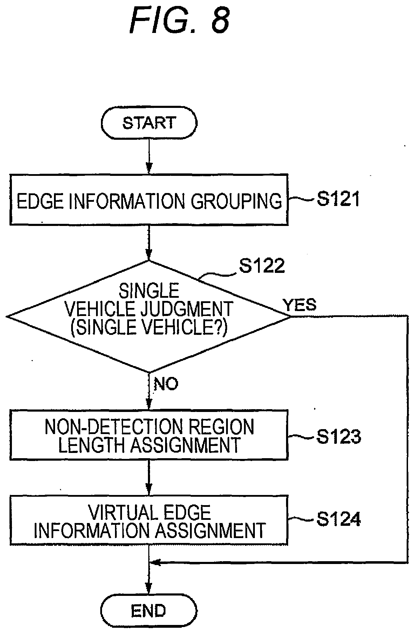

A process relating to such a case where a target vehicle is detected with the non-detection region sandwiched between the detection regions will be described with reference to a flowchart illustrated in FIG. 8. This process is a process relating to the entire vehicle recognition process S111 in FIG. 5 by the vehicle length determination unit 3 in the block configuration diagram of the object detection device 1 in FIG. 1 described in the above first embodiment. That is, the process of the flowchart illustrated in FIG. 8 is included in the entire vehicle recognition process S111 and all other processes follow the processes described in the above first embodiment.

In an edge information grouping process S121, based on edge information (information on the end portion) on the detected vehicle found out in the front/rear edge recognition process S102 for the detected matter in the above first embodiment, re-grouping is performed between the detected vehicles detected with the non-detection region sandwiched.

In a single vehicle judgment process S122, it is determined whether the information re-grouped in the edge information grouping process S121 represents a single vehicle.

In a case where it is determined in the single vehicle judgment process S122 that the re-grouped information represents a single vehicle, it is assumed that the entire vehicle is recognized, for example, with regard to a detected marker including the information on the front and rear edge portions (end points); then, a distance between coordinates of the front and rear edge portions (end points) is computed in the front-rear-edge-distance computation process S112 and a calculation result thereof is output as the vehicle length of the target vehicle in the vehicle length output process S113, as described in the above first embodiment.

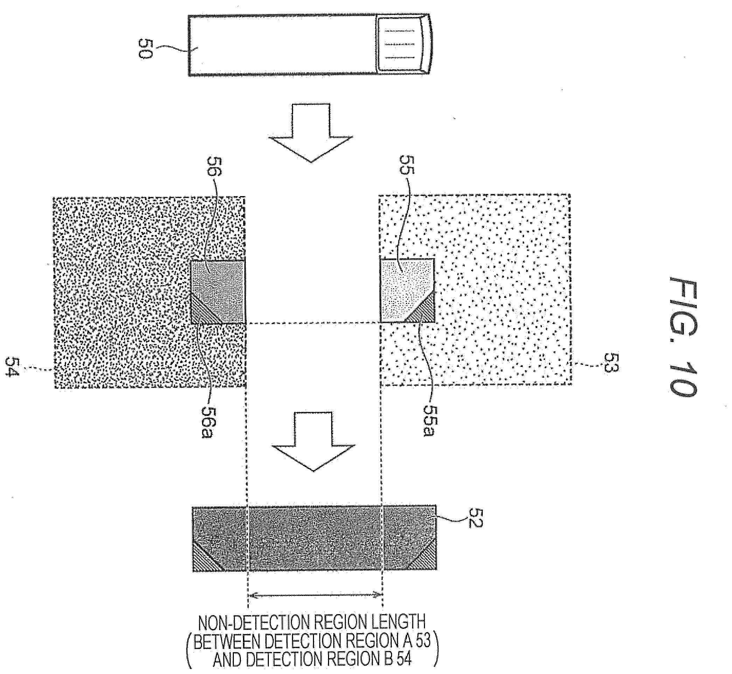

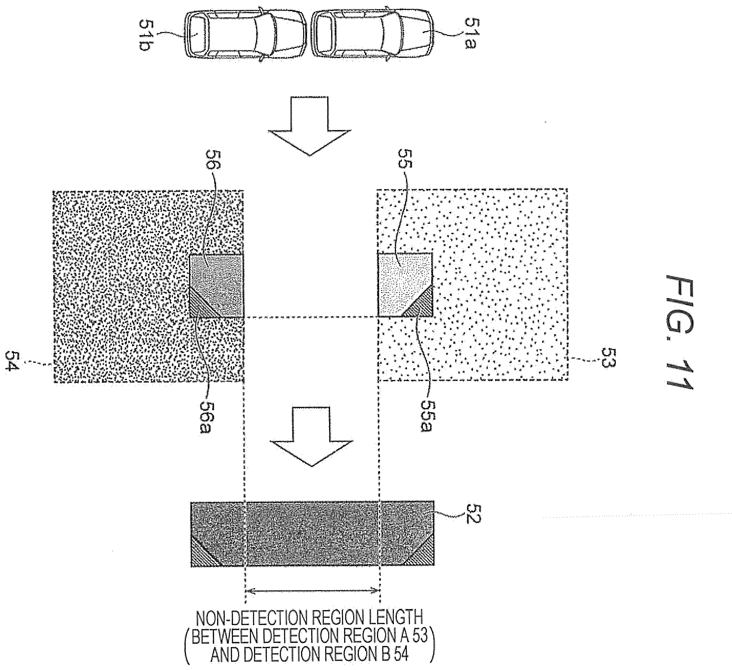

In other words, when both end portions (not necessarily both end portions of the same object) of the detected marker are detected across a plurality of detection regions with a non-detection region sandwiched therebetween, a region obtained by coupling (grouping) the object presence regions in the respective detection regions in which the end portions are detected and the non-detection region present therebetween is specified or estimated as an object presence region and a length of this object presence region in a predetermined direction (for example, a direction joining both the end portions, the front-rear direction of the vehicle, or a moving direction of the detected object) is determined as the vehicle length of the target vehicle (detailed later on the basis of FIGS. 10 and 11).

On the other hand, when it is determined in the single vehicle judgment process S122 that the re-grouped information does not represent a single vehicle, with regard to a detected marker having, for example, information on only one of the front or rear edge portions (end points) and a condition insufficient to be regarded as one vehicle, a non-detection region length of the non-detection region is added to the detection information (object presence region) on the detection region in a non-detection region length assignment process S123, presuming that the target (vehicle) is present across the non-detection region. That is, when the target is present across the non-detection region, it is presumed that the target is present in the entire non-detection region.

Next, by adding virtual edge (end portion) information for the added portion in a virtual edge information assignment process S124 in consideration of the non-detection region length added in the non-detection region length assignment process S123, it is assumed that the entire vehicle is recognized; then, a distance between coordinates of the front and rear edge portions (end points) is computed in the front-rear-edge-distance computation process S112 and a calculation result thereof is output as the vehicle length of the target vehicle in the vehicle length output process S113, as described in the above embodiment.

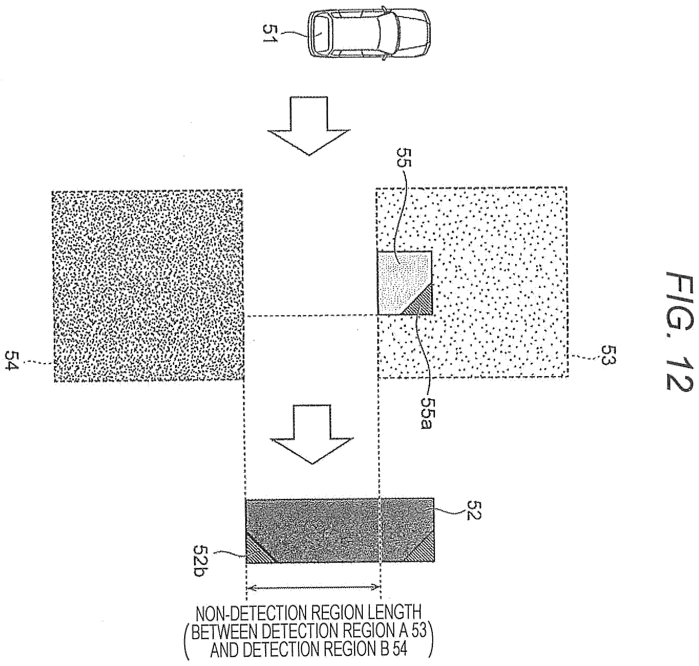

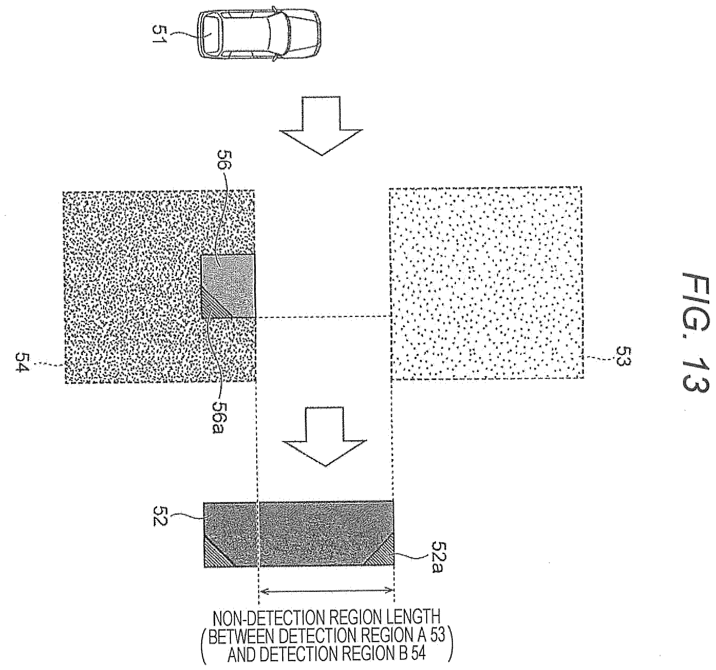

In other words, when one end portion of an object (detected marker) is detected in the detection region and the other end portion of the object (detected marker) is not detected in the detection region, a region obtained by coupling (grouping) the object presence region in the detection region in which this one end portion is detected and a non-detection region (entire range in a predetermined direction) adjacent to this object presence region is specified or estimated as an object presence region and a length of this object presence region in a predetermined direction (for example, a direction joining both the end portions, the front-rear direction of the vehicle, or a moving direction of the detected object) is determined as the vehicle length of the target vehicle (detailed later on the basis of FIGS. 12 and 13).

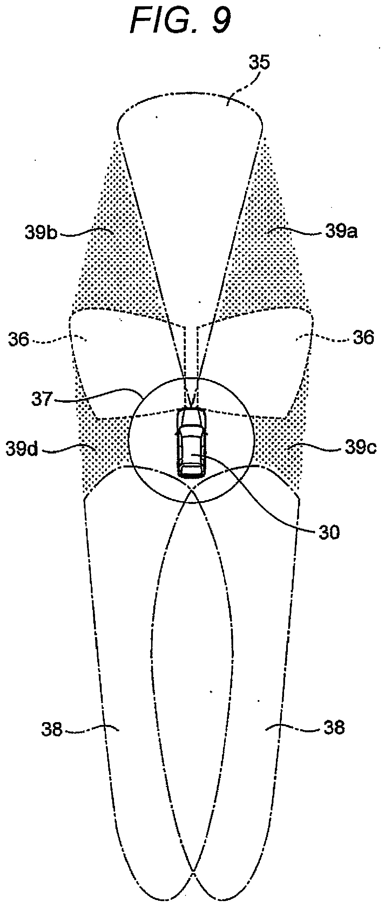

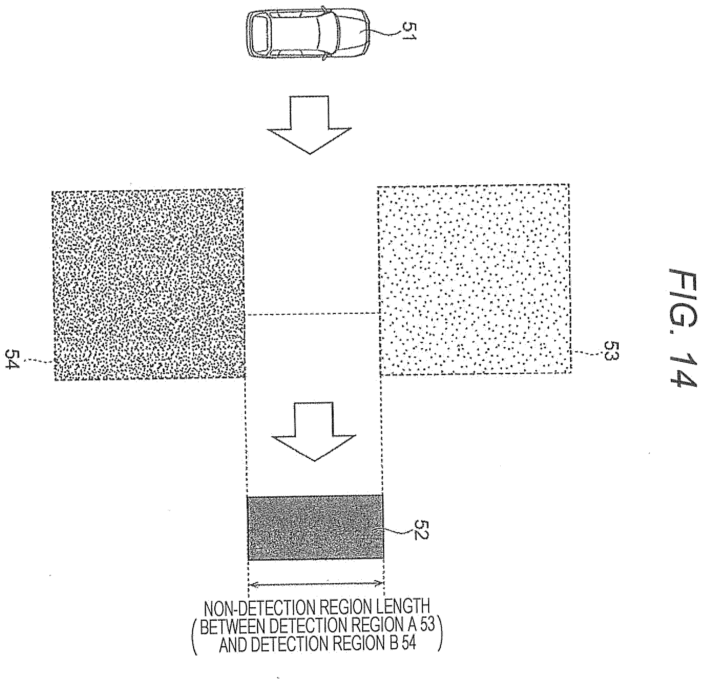

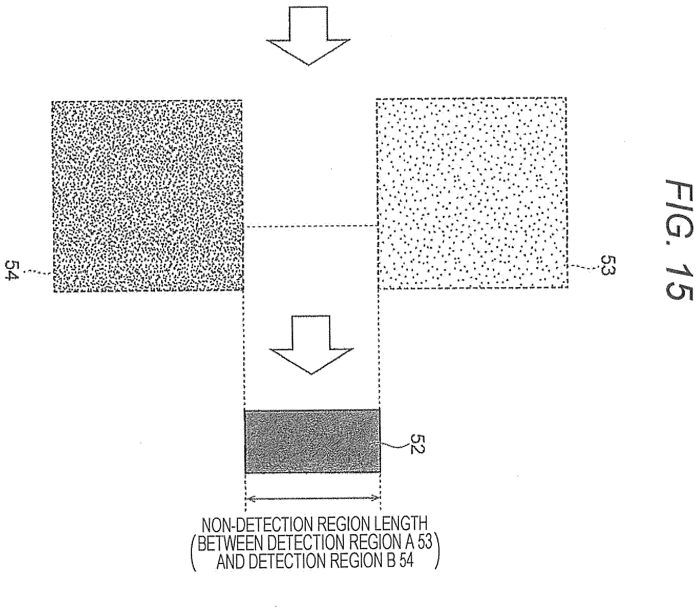

That is, in the present embodiment, in the entire vehicle recognition process S111 in the vehicle length determination unit 3, the non-detection region in which an object cannot be detected by a sensor or the like mounted on the vehicle 30, such as an area between the respective detection regions in the periphery of the vehicle 30 and a predetermined range from the vehicle 30 on the outside of the respective detection regions, is settled in advance as an object presence possibility region (39a to 39d) in which an object may be present (refer to FIG. 9). Then, when a part of an object (target vehicle) is detected in a certain detection region, a region obtained by coupling (grouping) an object presence region obtained by finding out the object in this detection region and a region of the object presence possibility region adjacent to this object presence region in this detection region is specified or estimated as an object presence region in which an object is present or an object may be present (detailed later on the basis of FIGS. 12 and 13). In addition, even when an object (target vehicle) is not detected at all in any detection region, an arbitrary region of the object presence possibility region (for example, a region having a predetermined length (a general vehicle length or longer) in the front-rear direction on the side of the vehicle) is estimated for the vehicle in advance as an object presence region in which an object may be present (detailed later on the basis of FIGS. 14 and 15).

### <Processing Pattern of Target Vehicle Detection (1)>

FIGS. 10 and 11 conceptually illustrate processing patterns in the case of detecting a target vehicle with a non-detection region sandwiched between different detection regions, particularly, processing patterns in the case of detecting a target vehicle (not necessarily the same vehicle) in each of the different detection regions.

FIG. 10 illustrates the same situation as that in FIG. 6.

When different detection region A 53 and detection region B 54 are disposed (with a non-detection region sandwiched therebetween) and a part of a target vehicle 50 is detected in each detection region, a part of the target vehicle 50 is detected as a detected marker (an object presence region in the detection region A 53) 55 in the detection region A 53. Likewise, a part of the target vehicle 50 is detected as a detected marker (an object presence region in the detection region B 54) 56 in the detection region B 54. The edge information on the detected markers 55 and 56 are noted as 55a and 56a, respectively. Here, presuming that a part of the target vehicle 50 is present also in the non-detection region (= object presence possibility region) sandwiched between the detected marker 55 and the detected marker 56, the process is carried out by recognizing a region obtained by adding a non-detection region length of the non-detection region to the detected marker 55 and the detected marker 56 as a detected vehicle (= object presence region) 52.

In addition, in this case, it is also conceivable that, as illustrated in FIG. 11, a plurality of (two in the illustrated case) target vehicles 51a and 51b aligned in series (longitudinally) are detected with a non-detection region sandwiched between different detection regions.

In the detection region A 53, a part (front part) of the target vehicle 51a on the front side is detected. In the detection region B 54, a part (rear part) of the target vehicle 51b on the rear side is detected. At this point, the detected marker 55 in the detection region A 53 and the detected marker 56 in the detection region B 54 are equivalent to the pattern in FIG. 10 and it is not possible to distinguish the plurality of (two) target vehicles 51a and 51b in reality. Therefore, similarly to the pattern in FIG. 10, presuming that the target vehicles 51a and 51b are present as the same object also in the non-detection region (= object presence possibility region) sandwiched between the detected marker 55 and the detected marker 56, the process is carried out by recognizing a region obtained by adding a non-detection region length of the non-detection region to the detected marker 55 and the detected marker 56 as the detected vehicle (= object presence region) 52.

### <Processing Pattern of Target Vehicle Detection (2)>

FIGS. 12 and 13 conceptually illustrate processing patterns in the case of detecting a target vehicle with a non-detection region sandwiched between different detection regions, particularly, processing patterns in the case of detecting a target vehicle in only one detection region.

In the case illustrated in FIG. 12, a part (front part) of a target vehicle 51 is detected only in the detection region A 53. In the detection region B 54, a detected matter is not present (not detected) and it can be inferred that the rear edge portion (end point) of the target vehicle 51 is located within a non-detection region (= object presence possibility region) between the detection region A 53 and the detection region B 54. However, it is not possible to further distinguish which range of this non-detection region is concerned. Therefore, the process is carried out by adding the non-detection region length of the non-detection region adjacent to the detected marker 55 in the detection region A 53 to the detected marker 55 in the detection region A 53 to recognize as the detected vehicle (= object presence region) 52 and at the same time by recognizing virtual edge information 52b at this detected vehicle 52 (a portion of the non-detection region length thereof).

Likewise, in the case illustrated in FIG. 13, a part (rear part) of the target vehicle 51 is detected only in the detection region B 54. In the detection region A 53, a detected matter is not present (not detected) and it can be inferred that the front edge portion (end point) of the target vehicle 51 is located within a non-detection region (= object presence possibility region) between the detection region A 53 and the detection region B 54. However, it is not possible to further distinguish which range of this non-detection region is concerned. Therefore, the process is carried out by adding the non-detection region length of the non-detection region adjacent to the detected marker 56 in the detection region B 54 to the detected marker 56 in the detection region B 54 to recognize as the detected vehicle (= object presence region) 52 and at the same time by recognizing virtual edge information 52a at this detected vehicle 52 (a portion of the non-detection region length thereof).

### <Processing Pattern of Target Vehicle Detection (3)>

FIGS. 14 and 15 conceptually illustrate processing patterns in the case of detecting a target vehicle with a non-detection region sandwiched between different detection regions, particularly, processing patterns in a case where no detected marker (object presence region) is present in adjacent detection regions (detection regions neighboring to each other) sandwiching an undetected region therebetween (in different terms, no detected matter is present in any detection region).

In the case illustrated in FIG. 14, the target vehicle 51 is present only in the non-detection region (= object presence possibility region) in the periphery of the vehicle. In this case, a detected marker is present in neither the detection region A 53 nor the detection region B 54 and the target vehicle 51 is still not detected in any detection region. This situation is equivalent to the state illustrated in FIG. 15 in which no target vehicle is present in the periphery of the vehicle. Therefore, in the situations illustrated in FIGS. 14 and 15, presuming that a target vehicle is always present within the non-detection region (in particular, within a range of the non-detection region decided in advance for the vehicle), the process is carried out by recognizing a whole non-detection region length of the non-detection region sandwiched by the detection regions as the detected vehicle (= object presence region) 52. However, the non-detection region length (the detected vehicle 52) in this case is settled to be equal to or longer than a general vehicle length.

As described thus far, according to the object detection device 1 of the present second embodiment, by associating detection results from the external environment information acquisition unit 2 for different detection regions in the surroundings of the vehicle, it is possible to appropriately specify or estimate an object presence region in which an object such as another vehicle in the periphery of the vehicle is present and appropriately calculate the vehicle length and the like of the another vehicle.

### [Vehicle Control System]

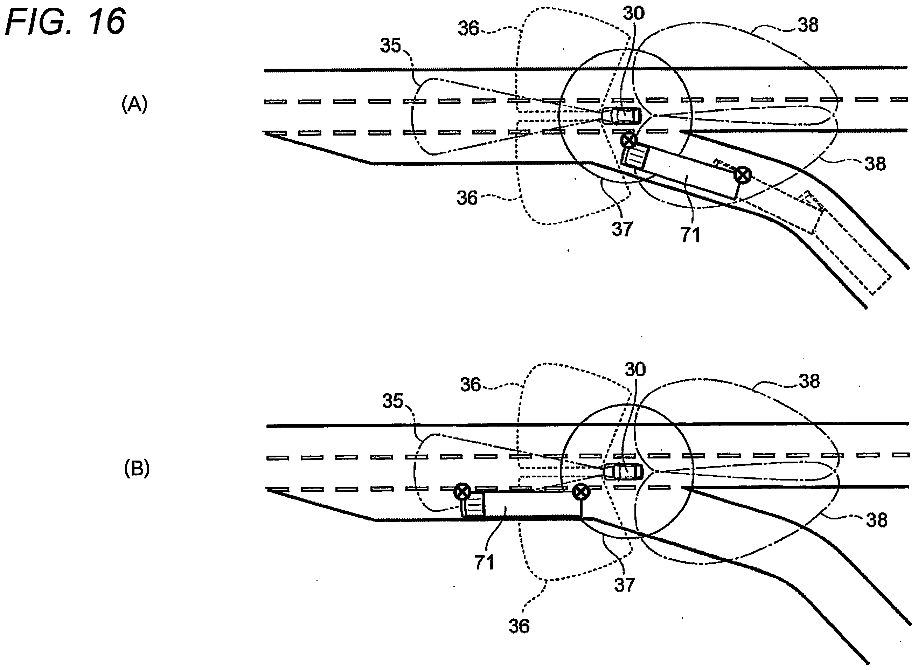

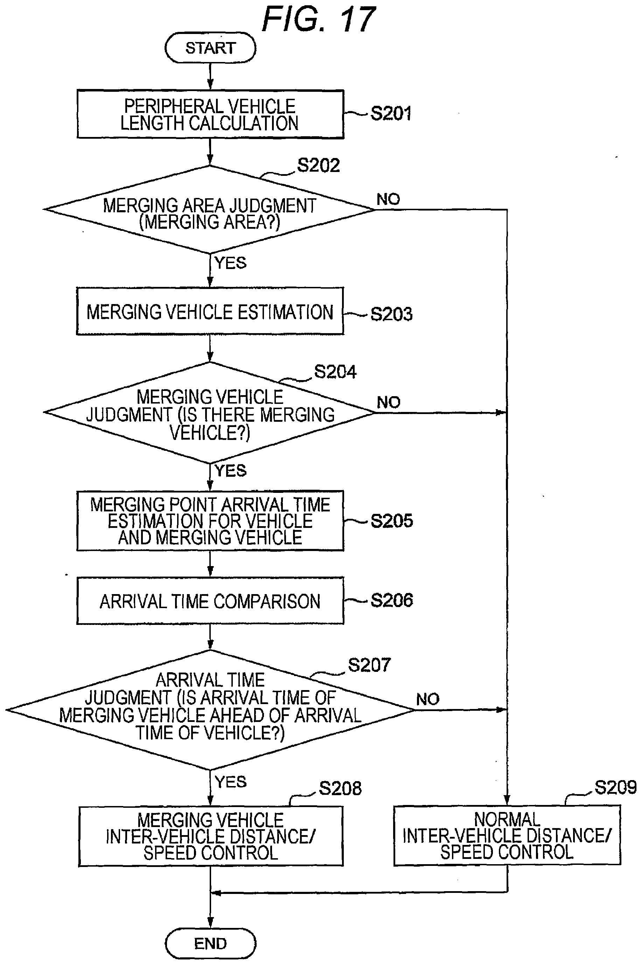

Next, one embodiment of a vehicle control system according to the present invention using one of the above-described object detection devices will be outlined with reference to FIGS. 16 and 17.

As illustrated in FIGS. 16(A) and 16(B), a situation is supposed here in which, when the vehicle 30 is traveling on a main line and a merging vehicle 71 is merging to the main line from a merging lane at a merging section in the front, a traveling state of the vehicle 30 is controlled (inter-vehicle distance control) by the travel control device. However, for example, it goes without saying that the present invention can be similarly applied to a case where the vehicle merges to the main line from the merging lane.

Note that, in the description of the object detection device according to the second embodiment described above, it is presumed that a target vehicle is present in advance in the non-detection region in which an object cannot be detected by a sensor of the external environment information acquisition unit 2 mounted on the vehicle 30. However, in a merging scene as illustrated in FIGS. 16(A) and 16(B), such an object (target vehicle) is defined to have both the same bearing and speed as those of the vehicle 30 but solely have a different presence position therefrom and is not regarded as a merging vehicle.

In other words, in a merging scene as illustrated in FIGS. 16(A) and 16(B), if the object (target vehicle) presumed to be present in the non-detection region at a certain time is different from the vehicle 30 in speed and bearing, the object after a predetermined time (Δt) will move into the detection region or outside the detection region. In this case, if the object has moved into the detection region, the above-described process of the object detection device of the second embodiment is applied. Otherwise the object is regarded as having moved outside the detection region and will not be regarded as a merging vehicle in a pattern other than the pattern of moving into the detection region.

FIG. 17 illustrates a processing flow of travel control (inter-vehicle distance control) by the vehicle control system according to the present invention.

In a peripheral vehicle length calculation process S201, the vehicle length of a vehicle detected by a sensor of the external environment information acquisition unit 2 mounted on the vehicle is constantly (periodically) calculated using the above-described object detection device.

In a merging area judgment process S202, it is judged from, for example, map information and front camera information whether there is a merging area in front of the vehicle.

When it is judged in the merging area judgment process S202 that there is a merging area, in a merging vehicle estimation process S203, whether a peripheral vehicle recognized in the peripheral vehicle length calculation process S201 is a merging vehicle in this merging area is estimated from the behavior (bearing, acceleration, traveling history, and the like) of this peripheral vehicle.

In a merging vehicle judgment process S204, whether there is a merging vehicle is judged from an estimation result in the merging vehicle estimation process S203.

When it is judged in the merging vehicle judgment process S204 that there is a merging vehicle, in a merging point arrival time estimation process S205 for the vehicle and the merging vehicle, the arrival times to the merging point of both of the vehicle and the merging vehicle are estimated from the traveling state and the like of the vehicle and the merging vehicle.

In an arrival time comparison process S206, the arrival times to the merging point estimated in the merging point arrival time estimation process S205 for the vehicle and the merging vehicle are compared between the vehicle and the merging vehicle.

In an arrival time judgment process S207, it is judged which one of the arrival times to the merging point compared in the arrival time comparison process S206 is earlier, in detail, whether the arrival time to the merging point of the merging vehicle is ahead of that of the vehicle.

When it is judged in the arrival time judgment process S207 that the merging vehicle has an earlier arrival time to the merging point, in a merging vehicle inter-vehicle distance/speed control process S208, inter-vehicle distance control and speed control with respect to the merging vehicle is performed according to the behavior, the vehicle length, and the like of the merging vehicle by the travel control device mounted on the vehicle so as to guide the vehicle behind or in front of the merging vehicle (in other words, the object presence region derived by the object detection device) in the moving direction.

On the other hand, when it is judged in the merging area judgment process S202 that there is no merging area, or it is judged in the merging vehicle judgment process S204 that there is no merging vehicle, or it is judged in the arrival time judgment process S207 that the vehicle first arrives at the merging point, normal vehicle travel control is performed in a normal inter-vehicle distance/speed control process S209.

Note that, in the above embodiment, the normal vehicle travel control is performed when it is judged in the arrival time judgment process S207 that the vehicle first arrives at the merging point. However, for example, even when it is judged that the vehicle first arrives at the merging point in the arrival time judgment process S207 from the arrival times to the merging point and behavior of the vehicle and the merging vehicle, traffic and road environments in the periphery of the vehicle, and the like, speed control and the like of this vehicle may be performed in order to support smooth merging.

As described thus far, according to the vehicle control system of the present embodiment, by controlling the traveling state of the vehicle based on the object presence region (vehicle length information on another vehicle) specified or estimated by the object detection device, for example, determination on vehicle interrupting (being interrupted) at the time of merging during operation of the automatic driving/driving support system can be accurately judged.

Furthermore, part or all of the respective configurations, functions, processing units, processing means, and the like described above may be implemented by hardware designed, for example, using an integrated circuit. The respective configurations, functions, and the like described above may be implemented by software in which a processor parses a program that implements each of the functions to execute. Information such as the programs, the tables, and the files that implement the respective functions can be placed on a storage device including a memory, a hard disk, and a solid state drive (SSD), or alternatively, a recording medium including an integrated circuit (IC) card, an SD card, and a digital versatile disc (DVD).

Meanwhile, the control lines and the information lines considered to be necessary for the description are indicated and therefore, all of the control lines and the information lines on a product are not necessarily indicated. Actually, substantially all of the configurations may be considered to be connected to each other.

### Reference Signs List

- 1: object detection device
- 2: external environment information acquisition unit
- 3: vehicle length determination unit (object presence region setting unit)
- 7: physical value computation unit
- 8: fusion computation unit
- 9: vehicle length computation unit
- 30: vehicle
- 31: target vehicle
- 32: detected matter
- 33: detected matter
- 34: target vehicle grouped as same vehicle
- 35: front camera detection region
- 36: front side radio wave radar detection region
- 37: 360-degree wide angle camera detection region
- 38: rear side radio wave radar detection region
- 39a to 39d: object presence possibility region
- 50: target vehicle
- 51: target vehicle
- 51a: target vehicle
- 51b: target vehicle
- 52: estimated detected vehicle (object presence region)
- 53: detection region A
- 54: detection region B
- 55: detected matter (detected marker) in detection region A
- 56: detected matter (detected marker) in detection region B
- 71: merging vehicle

## Claims

1. An object detection device (1) comprising:
an external environment information acquisition unit (2) configured to acquire external environment information for different detection regions (35, 36, 37, 38) in the surroundings of a vehicle (30) using a plurality of sensors (4, 5, 6) mounted on the vehicle (30); and
an object presence region setting unit (3) configured to
associate detection results from the external environment information acquisition unit (2) for the different detection regions (35, 36, 37, 38),
to specify, or to estimate, object presence regions in which an object is present in the surroundings of the vehicle (30), and to determine a length of another vehicle detected in the surroundings of the vehicle (30), the other vehicle being the object, wherein
the object presence region setting unit (3) is configured to determine the length of the other vehicle (31, 32, 33, 34) by
recognizing a front edge portion(32a) and a rear edge portion(33a) of the other vehicle (31, 32, 33, 34) based on measuring signals of the plurality of sensors (4, 5, 6), wherein the plurality of sensors (4, 5, 6) include a camera (4) attached to the front of the vehicle (30) for detecting a region (35) in front of the vehicle (30), a plurality of wide angle cameras (4) attached to the front, rear, left, and right of the vehicle (30) for detecting a region (37) around 360 degrees of the periphery of the vehicle (30), and a radio wave radar (5) attached to each of the front, rear, left, and right end portions of the vehicle (30) for detecting regions (36, 38) in a front side area and a rear side area of the vehicle (30), wherein
each camera (4) is configured to find out image marker information as measuring signals and to recognize an edge portion (32a, 33a) of the detected other vehicle (31, 32, 33, 34) by combinations of longitudinal edges and pattern matching of the other vehicle (31, 32, 33, 34) based on the captured images, and
the radio wave radar (5) is configured to transmit radio waves to the detecting regions (36, 38) in the front side area and the rear side area of the vehicle (30) to receive reflected waves from objects in the detecting regions (36, 38) as a measuring signal, and to find out radar marker information including a relative distance, direction, and size in a horizontal direction and the relative speed with respect to these objects in the detecting regions (36, 38) in the front side area and the rear side area of the vehicle (30),
wherein the radio wave radar (5) is configured to recognize an edge portion (32a, 33a) of the detected other vehicle (31, 32, 33, 34) by narrowing a transmission beam when the other vehicle (31, 32, 33, 34) has been detected within the detection regions (36, 38) and determining the radio wave reflection intensity for the detected other vehicle (31, 32, 33, 34), wherein
the object presence region setting unit (3) is configured to indicate image marker information detected in the region (37) around 360 degrees of the periphery of the vehicle (30) as a first detected other vehicle (32) including the front edge portion (32a) in a first detection region (37), and radar marker information detected in the front side area (36) or the rear side area (38) of the vehicle (30) as a second detected other vehicle (33) including the rear edge portion (33a) in a second detection region (38),
to map the first and the second detected other vehicle (32, 33) in a coordinate system referenced to the vehicle (30) using range and azimuth angle information from the radar marker information and the front and rear edge portion (32a, 33a) of the image marker information,
to group the first and second detected other vehicle (32, 33) detected across the first and second detection region (36, 38) to a single detected other vehicle (34) including the front edge portion (32a) and the rear edge portion (33a) using trajectory prediction according to each detection region;
mapping positions of the front edge portion (32a) and the rear edge portion (33a) of the detected other vehicle (31, 32, 33, 34) in a mapping diagram (41) including the coordinate system referenced to the vehicle (30), and
calculating the length of the detected other vehicle (31, 32, 33, 34) based on a distance between coordinates of the front edge portion (32a) and the rear edge portion (33a) of the detected other vehicle (31, 32, 33, 34) in the mapping diagram (41).

2. The object detection device (1) according to claim 1, wherein the object presence region setting unit (3) is configured to change a specification or estimation method for the object presence regions on the basis of whether the other vehicle (31, 32, 33, 34) has been detected in each detection region (35, 36, 37, 38).

3. The object detection device (1) according to claim 1, wherein, when detecting the other vehicle (31, 32, 33, 34) in at least one of the detection regions (35, 36, 37, 38), the object presence region setting unit (3) is configured to specify or estimate a region of the one of the detection regions (35, 36, 37, 38) including the other vehicle as one of the object presence regions.

4. The object detection device (1) according to claim 3, wherein, when the entire other vehicle is detected across a plurality of detection regions (35, 36, 37, 38), the object presence region setting unit (3) is configured to specify or estimate a region obtained by grouping object presence regions in respective detection regions (35, 36, 37, 38) of the plurality of detection regions (35, 36, 37, 38) as one of the object presence regions.

5. The object detection device (1) according to claim 1, wherein, when a plurality of end portions of the other vehicle is detected across a plurality of detection regions (35, 36, 37, 38) with a non-detection region sandwiched therebetween, the object presence region setting unit (3) is configured to specify or estimate a region obtained by grouping object presence regions in the respective detection regions (35, 36, 37, 38) in which the end portions have been detected, and the non-detection region present therebetween, as one of the object presence regions, wherein a non-detection region is a region where an object cannot be detected by the plurality of sensors (4, 5, 6) mounted on the vehicle.

6. The object detection device (1) according to claim 1, wherein, when one end portion of the other vehicle is detected in one of the detection regions (35, 36, 37, 38) and another end portion of the other vehicle is not detected in the detection regions (35, 36, 37, 38), the object presence region setting unit (3) is configured to specify or estimate a region obtained by grouping an object presence region in the one of the detection regions (35, 36, 37, 38) in which the one end portion has been detected, and a non-detection region adjacent to this object presence region, as one of the object presence regions, wherein a non-detection region is a region where an object cannot be detected by the plurality of sensors (4, 5, 6) mounted on the vehicle.

7. A vehicle control system comprising:
the object detection device (1) according to claim 1; and
a travel control device configured to control a traveling state of the vehicle (30) on the basis of an object presence region specified or estimated by the object detection device (1).

8. The vehicle control system according to claim 7, wherein the travel control device is configured to control a traveling state of the vehicle (30) so as to guide the vehicle (30) in front of or behind the object presence region while the vehicle (30) is traveling.

9. An object detection method, comprising:
acquiring external environment information for different detection regions (35, 36, 37, 38) in the surroundings of a vehicle (30) using a plurality of sensors (4, 5, 6) mounted on the vehicle (30);
associating detection results from an external environment information acquisition unit (2) for the different detection regions (35, 36, 37, 38);
and determining a length of another vehicle detected in the surroundings of the vehicle (30), wherein the length of the other vehicle is determined by
recognizing a front edge portion (32a) and a rear edge portion (33a) of the other vehicle (31, 32, 33, 34) based on measuring signals of the plurality of sensors (4, 5, 6), wherein the plurality of sensors (4, 5, 6) include a camera (4) attached to the front of the vehicle (30) for detecting a region (35) in front of the vehicle (30), a plurality of wide angle cameras (4) attached to the front, rear, left, and right of the vehicle (30) for detecting a region (37) around 360 degrees of the periphery of the vehicle (30), and a radio wave radar (5) attached to each of the front, rear, left, and right end portions of the vehicle (30) for detecting regions (36, 38) in a front side area and a rear side area of the vehicle (30), wherein
each camera (4) is configured to find out image marker information as measuring signals and to recognize an edge portion (32a, 33a) of the detected other vehicle (31, 32, 33, 34) by combinations of longitudinal edges and pattern matching of the other vehicle (31, 32, 33, 34) based on captured images, and
the radio wave radar (5) is configured to transmit radio waves to the detecting regions (36, 38) in the front side area and the rear side area of the vehicle (30) to receive reflected waves from objects in the detecting regions (36, 38) as a measuring signal, and to find out radar marker information including a relative distance, direction, and size in a horizontal direction and the relative speed with respect to these objects in the detecting regions (36, 38) in the front side area and the rear side area of the vehicle (30),
wherein the radio wave radar (5) is configured to recognize an edge portion (32a, 33a) of the detected other vehicle (31, 32, 33, 34) by narrowing a transmission beam when the other vehicle (31, 32, 33, 34) has been detected within the detection regions (36, 38) and determining the radio wave reflection intensity for the detected other vehicle (31, 32, 33, 34), wherein
image marker information detected in the region (37) around 360 degrees of the periphery of the vehicle (30) is indicated as a first detected other vehicle (32) including the front edge portion (32a) in a first detection region (37), and radar marker information detected in the front side area (36) or the rear side area (38) of the vehicle (30) is indicated as a second detected other vehicle (33) including the rear edge portion (33a) in a second detection region (38),
the first and the second detected other vehicle (32, 33) are mapped in a coordinate system referenced to the vehicle (30) using range and azimuth angle information from the radar marker information and the front and rear edge portion (32a, 33a) of the image marker information,
the first and second detected other vehicle (32, 33) detected across the first and second detection region (36, 38) are grouped to a single detected other vehicle (34) including the front edge portion (32a) and the rear edge portion (33a) using trajectory prediction according to each detection region;
mapping positions of the front edge portion (32a) and the rear edge portion (33a) of the other vehicle (31, 32, 33, 34) in a mapping diagram (41) including a coordinate system referenced to the vehicle (30), and
calculating the length of the other vehicle (31, 32, 33, 34) based on a distance between coordinates of the front edge portion (32a) and the rear edge portion (33a) of the other vehicle (31, 32, 33, 34) in the mapping diagram (41).

## Patentansprüche

1. Objektdetektionsvorrichtung (1), umfassend:
eine Außenumgebungsinformationserfassungseinheit (2), die konfiguriert ist, um Außenumgebungsinformationen für verschiedene Detektionsbereiche (35, 36, 37, 38) in der Umgebung eines Fahrzeugs (30) unter Verwendung einer Vielzahl von Sensoren (4, 5, 6), die an dem Fahrzeug (30) angebracht sind, zu erfassen; und
eine Objektpräsenzbereichseinstelleinheit (3), die konfiguriert ist, um
Detektionsergebnisse von der Außenumgebungsinformationserfassungseinheit (2) für die verschiedenen Detektionsbereiche (35, 36, 37, 38) zuzuordnen,
Objektpräsenzbereiche zu spezifizieren oder zu schätzen, in denen ein Objekt in der Umgebung des Fahrzeugs (30) vorhanden ist, und eine Länge eines anderen Fahrzeugs zu bestimmen, das in der Umgebung des Fahrzeugs (30) detektiert wird, wobei das andere Fahrzeug das Objekt ist, wobei
die Objektpräsenzbereichseinstelleinheit (3) konfiguriert ist, um die Länge des anderen Fahrzeugs (31, 32, 33, 34) zu bestimmen durch
Erkennen eines Vorderkantenabschnitts (32a) und eines Hinterkantenabschnitts (33a) des anderen Fahrzeugs (31, 32, 33, 34) basierend auf Messsignalen der Vielzahl von Sensoren (4, 5, 6), wobei die Vielzahl von Sensoren (4, 5, 6) eine Kamera (4), die an der Vorderseite des Fahrzeugs (30) angebracht ist, um einen Bereich (35) vor dem Fahrzeug (30) zu detektieren, eine Vielzahl von Weitwinkelkameras (4), die an der Vorderseite, der Rückseite, der linken und der rechten Seite des Fahrzeugs (30) angebracht sind, um einen Bereich (37) um 360 Grad der Peripherie des Fahrzeugs (30) zu detektieren, und ein Funkwellenradar (5), das an jedem der vorderen, hinteren, linken und rechten Endabschnitte des Fahrzeugs (30) angebracht ist, um Bereiche (36, 38) in einem Vorderseitenbereich und einem Rückseitenbereich des Fahrzeugs (30) zu detektieren, beinhalten, wobei
jede Kamera (4) konfiguriert ist, um Bildmarkierungsinformationen als Messsignale herauszufinden und einen Kantenabschnitt (32a, 33a) des detektierten anderen Fahrzeugs (31, 32, 33, 34) durch Kombinationen von Längskanten und Musterabgleich des anderen Fahrzeugs (31, 32, 33, 34) basierend auf den erfassten Bildern zu erkennen, und
das Funkwellenradar (5) konfiguriert ist, um Funkwellen an die Detektionsbereiche (36, 38) in dem Vorderseitenbereich und dem Rückseitenbereich des Fahrzeugs (30) zu übertragen, um reflektierte Wellen von Objekten in den Detektionsbereichen (36, 38) als ein Messsignal zu empfangen und um Radarmarkierungsinformationen herauszufinden, die eine relative Entfernung, Richtung und Größe in einer horizontalen Richtung und die relative Geschwindigkeit in Bezug auf diese Objekte in den Detektionsbereichen (36, 38) in dem Vorderseitenbereich und dem Rückseitenbereich des Fahrzeugs (30) beinhalten,
wobei das Funkwellenradar (5) konfiguriert ist, um einen Kantenabschnitt (32a, 33a) des detektierten anderen Fahrzeugs (31, 32, 33, 34) durch Verengen eines Übertragungsstrahls, wenn das andere Fahrzeug (31, 32, 33, 34) innerhalb der Detektionsbereiche (36, 38) detektiert wurde, und Bestimmen der Funkwellenreflexionsintensität für das detektierte andere Fahrzeug (31, 32, 33, 34) zu erkennen, wobei
die Objektpräsenzbereichseinstelleinheit (3) konfiguriert ist, um Bildmarkierungsinformationen, die in dem Bereich (37) um 360 Grad der Peripherie des Fahrzeugs (30) detektiert werden, als ein erstes detektiertes anderes Fahrzeug (32), das den Vorderkantenabschnitt (32a) in einem ersten Detektionsbereich (37) beinhaltet, und Radarmarkierungsinformationen, die in dem Vorderseitenbereich (36) oder dem Rückseitenbereich (38) des Fahrzeugs (30) detektiert werden, als ein zweites detektiertes anderes Fahrzeug (33), das den Hinterkantenabschnitt (33a) in einem zweiten Detektionsbereich (38) beinhaltet, anzugeben,
das erste und das zweite detektierte andere Fahrzeug (32, 33) in einem Koordinatensystem, das auf das Fahrzeug (30) bezogen ist, unter Verwendung von Bereichs- und Azimutwinkelinformationen aus den Radarmarkierungsinformationen und dem Vorder- und Hinterkantenabschnitt (32a, 33a) der Bildmarkierungsinformationen abzubilden,
das erste und das zweite detektierte andere Fahrzeug (32, 33), die über den ersten und den zweiten Detektionsbereich (36, 38) detektiert werden, zu einem einzelnen detektierten anderen Fahrzeug (34), das den Vorderkantenabschnitt (32a) und den Hinterkantenabschnitt (33a) beinhaltet, unter Verwendung von Trajektorienvorhersage gemäß jedem Detektionsbereich zu gruppieren;
Positionen des Vorderkantenabschnitts (32a) und des Hinterkantenabschnitts (33a) des detektierten anderen Fahrzeugs (31, 32, 33, 34) in einem Abbildungsdiagramm (41), das das Koordinatensystem beinhaltet, das auf das Fahrzeug (30) bezogen ist, abzubilden, und
die Länge des detektierten anderen Fahrzeugs (31, 32, 33, 34) basierend auf einer Entfernung zwischen Koordinaten des Vorderkantenabschnitts (32a) und des Hinterkantenabschnitts (33a) des detektierten anderen Fahrzeugs (31, 32, 33, 34) in dem Abbildungsdiagramm (41) zu berechnen.

2. Objektdetektionsvorrichtung (1) nach Anspruch 1, wobei die Objektpräsenzbereichseinstelleinheit (3) konfiguriert ist, um ein Spezifikations- oder Schätzverfahren für die Objektpräsenzbereiche basierend darauf zu ändern, ob das andere Fahrzeug (31, 32, 33, 34) in jedem Detektionsbereich (35, 36, 37, 38) detektiert wurde.

3. Objektdetektionsvorrichtung (1) nach Anspruch 1, wobei, wenn das andere Fahrzeug (31, 32, 33, 34) in mindestens einem der Detektionsbereiche (35, 36, 37, 38) detektiert wird, die Objektpräsenzbereichseinstelleinheit (3) konfiguriert ist, um einen Bereich des einen der Detektionsbereiche (35, 36, 37, 38), der das andere Fahrzeug beinhaltet, als einen der Objektpräsenzbereiche zu spezifizieren oder zu schätzen.

4. Objektdetektionsvorrichtung (1) nach Anspruch 3, wobei, wenn das gesamte andere Fahrzeug über eine Vielzahl von Detektionsbereichen (35, 36, 37, 38) detektiert wird, die Objektpräsenzbereichseinstelleinheit (3) konfiguriert ist, um einen Bereich zu spezifizieren oder zu schätzen, der durch Gruppieren von Objektpräsenzbereichen in jeweiligen Detektionsbereichen (35, 36, 37, 38) der Vielzahl von Detektionsbereichen (35, 36, 37, 38) als einen der Objektpräsenzbereiche erhalten wird.

5. Objektdetektionsvorrichtung (1) nach Anspruch 1, wobei, wenn eine Vielzahl von Endabschnitten des anderen Fahrzeugs über eine Vielzahl von Detektionsbereichen (35, 36, 37, 38) mit einem dazwischen liegenden Nicht-Detektionsbereich detektiert wird, die Objektpräsenzbereichseinstelleinheit (3) konfiguriert ist, um einen Bereich, der durch Gruppieren von Objektpräsenzbereichen in den jeweiligen Detektionsbereichen (35, 36, 37, 38), in denen die Endabschnitte detektiert wurden, und dem dazwischen liegenden Nicht-Detektionsbereich erhalten wird, als einen der Objektpräsenzbereiche zu spezifizieren oder zu schätzen, wobei ein Nicht-Detektionsbereich ein Bereich ist, in dem ein Objekt durch die Vielzahl von Sensoren (4, 5, 6), die an dem Fahrzeug angebracht sind, nicht detektiert werden kann.

6. Objektdetektionsvorrichtung (1) nach Anspruch 1, wobei, wenn ein Endabschnitt des anderen Fahrzeugs in einem der Detektionsbereiche (35, 36, 37, 38) detektiert wird und ein anderer Endabschnitt des anderen Fahrzeugs nicht in den Detektionsbereichen (35, 36, 37, 38) detektiert wird, die Objektpräsenzbereichseinstelleinheit (3) konfiguriert ist, um einen Bereich, der durch Gruppieren eines Objektpräsenzbereichs in dem einen der Detektionsbereiche (35, 36, 37, 38), in dem der eine Endabschnitt detektiert wurde, und eines Nicht-Detektionsbereichs, der zu diesem Objektpräsenzbereich benachbart ist, erhalten wird, als einen der Objektpräsenzbereiche zu spezifizieren oder zu schätzen, wobei ein Nicht-Detektionsbereich ein Bereich ist, in dem ein Objekt durch die Vielzahl von Sensoren (4, 5, 6), die an dem Fahrzeug angebracht sind, nicht detektiert werden kann.

7. Fahrzeugsteuersystem, umfassend:
die Objektdetektionsvorrichtung (1) nach Anspruch 1; und
eine Fahrsteuervorrichtung, die konfiguriert ist, um einen Fahrzustand des Fahrzeugs (30) auf der Grundlage eines Objektpräsenzbereichs, der durch die Objektdetektionsvorrichtung (1) spezifiziert oder geschätzt wird, zu steuern.

8. Fahrzeugsteuersystem nach Anspruch 7, wobei die Fahrsteuervorrichtung konfiguriert ist, um einen Fahrzustand des Fahrzeugs (30) zu steuern, um das Fahrzeug (30) vor oder hinter dem Objektpräsenzbereich zu führen, während das Fahrzeug (30) fährt.

9. Objektdetektionsverfahren, umfassend:
Erfassen von Außenumgebungsinformationen für verschiedene Detektionsbereiche (35, 36, 37, 38) in der Umgebung eines Fahrzeugs (30) unter Verwendung einer Vielzahl von Sensoren (4, 5, 6), die an dem Fahrzeug (30) angebracht sind;
Zuordnen von Detektionsergebnissen von einer Außenumgebungsinformationserfassungseinheit (2) für die verschiedenen Detektionsbereiche (35, 36, 37, 38);
und Bestimmen einer Länge eines anderen Fahrzeugs, das in der Umgebung des Fahrzeugs (30) detektiert wird, wobei die Länge des anderen Fahrzeugs bestimmt wird durch
Erkennen eines Vorderkantenabschnitts (32a) und eines Hinterkantenabschnitts (33a) des anderen Fahrzeugs (31, 32, 33, 34) basierend auf Messsignalen der Vielzahl von Sensoren (4, 5, 6), wobei die Vielzahl von Sensoren (4, 5, 6) eine Kamera (4), die an der Vorderseite des Fahrzeugs (30) angebracht ist, um einen Bereich (35) vor dem Fahrzeug (30) zu detektieren, eine Vielzahl von Weitwinkelkameras (4), die an der Vorderseite, der Rückseite, der linken und der rechten Seite des Fahrzeugs (30) angebracht sind, um einen Bereich (37) um 360 Grad der Peripherie des Fahrzeugs (30) zu detektieren, und ein Funkwellenradar (5), das an jedem der vorderen, hinteren, linken und rechten Endabschnitte des Fahrzeugs (30) angebracht ist, um Bereiche (36, 38) in einem Vorderseitenbereich und einem Rückseitenbereich des Fahrzeugs (30) zu detektieren, beinhalten, wobei
jede Kamera (4) konfiguriert ist, um Bildmarkierungsinformationen als Messsignale herauszufinden und einen Kantenabschnitt (32a, 33a) des detektierten anderen Fahrzeugs (31, 32, 33, 34) durch Kombinationen von Längskanten und Musterabgleich des anderen Fahrzeugs (31, 32, 33, 34) basierend auf erfassten Bildern zu erkennen, und
das Funkwellenradar (5) konfiguriert ist, um Funkwellen an die Detektionsbereiche (36, 38) in dem Vorderseitenbereich und dem Rückseitenbereich des Fahrzeugs (30) zu übertragen, um reflektierte Wellen von Objekten in den Detektionsbereichen (36, 38) als ein Messsignal zu empfangen und um Radarmarkierungsinformationen herauszufinden, die eine relative Entfernung, Richtung und Größe in einer horizontalen Richtung und die relative Geschwindigkeit in Bezug auf diese Objekte in den Detektionsbereichen (36, 38) in dem Vorderseitenbereich und dem Rückseitenbereich des Fahrzeugs (30) beinhalten,
wobei das Funkwellenradar (5) konfiguriert ist, um einen Kantenabschnitt (32a, 33a) des detektierten anderen Fahrzeugs (31, 32, 33, 34) durch Verengen eines Übertragungsstrahls, wenn das andere Fahrzeug (31, 32, 33, 34) innerhalb der Detektionsbereiche (36, 38) detektiert wurde, und Bestimmen der Funkwellenreflexionsintensität für das detektierte andere Fahrzeug (31, 32, 33, 34) zu erkennen, wobei
Bildmarkierungsinformationen, die in dem Bereich (37) um 360 Grad der Peripherie des Fahrzeugs (30) detektiert werden, als ein erstes detektiertes anderes Fahrzeug (32), das den Vorderkantenabschnitt (32a) in einem ersten Detektionsbereich (37) beinhaltet, angegeben werden und Radarmarkierungsinformationen, die in dem Vorderseitenbereich (36) oder dem Rückseitenbereich (38) des Fahrzeugs (30) detektiert werden, als ein zweites detektiertes anderes Fahrzeug (33), das den Hinterkantenabschnitt (33a) in einem zweiten Detektionsbereich (38) beinhaltet, angegeben werden,
das erste und das zweite detektierte andere Fahrzeug (32, 33) in einem Koordinatensystem, das auf das Fahrzeug (30) bezogen ist, unter Verwendung von Bereichs- und Azimutwinkelinformationen aus den Radarmarkierungsinformationen und dem Vorder- und Hinterkantenabschnitt (32a, 33a) der Bildmarkierungsinformationen abgebildet werden,
das erste und das zweite detektierte andere Fahrzeug (32, 33), die über den ersten und den zweiten Detektionsbereich (36, 38) detektiert werden, zu einem einzelnen detektierten anderen Fahrzeug (34), das den Vorderkantenabschnitt (32a) und den Hinterkantenabschnitt (33a) beinhaltet, unter Verwendung von Trajektorienvorhersage gemäß jedem Detektionsbereich gruppiert werden;
Positionen des Vorderkantenabschnitts (32a) und des Hinterkantenabschnitts (33a) des anderen Fahrzeugs (31, 32, 33, 34) in einem Abbildungsdiagramm (41), das ein Koordinatensystem beinhaltet, das auf das Fahrzeug (30) bezogen ist, abgebildet werden, und
die Länge des anderen Fahrzeugs (31, 32, 33, 34) basierend auf einer Entfernung zwischen Koordinaten des Vorderkantenabschnitts (32a) und des Hinterkantenabschnitts (33a) des anderen Fahrzeugs (31, 32, 33, 34) in dem Abbildungsdiagramm (41) berechnet wird.

## Revendications

1. Dispositif de détection d'objet (1) comprenant :
une unité d'acquisition d'informations d'environnement externe (2) configurée pour acquérir des informations d'environnement externe pour différentes régions de détection (35, 36, 37, 38) dans les environs d'un véhicule (30) en utilisant une pluralité de capteurs (4, 5, 6) montés sur le véhicule (30) ; et
une unité de réglage de région de présence d'objet (3) configurée pour
associer des résultats de détection provenant de l'unité d'acquisition d'informations d'environnement externe (2) pour les différentes régions de détection (35, 36, 37, 38),
spécifier, ou estimer, des régions de présence d'objet dans lesquelles un objet est présent dans les environs du véhicule (30), et déterminer une longueur d'un autre véhicule détecté dans les environs du véhicule (30), l'autre véhicule étant l'objet, dans lequel
l'unité de réglage de région de présence d'objet (3) est configurée pour déterminer la longueur de l'autre véhicule (31, 32, 33, 34) en
reconnaissant une partie de bord avant (32a) et une partie de bord arrière (33a) de l'autre véhicule (31, 32, 33, 34) sur la base de signaux de mesure de la pluralité de capteurs (4, 5, 6), dans lequel la pluralité de capteurs (4, 5, 6) comprennent une caméra (4) fixée à l'avant du véhicule (30) pour détecter une région (35) à l'avant du véhicule (30), une pluralité de caméras grand angle (4) fixées à l'avant, à l'arrière, à gauche et à droite du véhicule (30) pour détecter une région (37) à environ 360 degrés de la périphérie du véhicule (30), et un radar à ondes radio (5) fixé à chacune des parties d'extrémité avant, arrière, gauche et droite du véhicule (30) pour détecter des régions (36, 38) dans une zone latérale avant et une zone latérale arrière du véhicule (30), dans lequel
chaque caméra (4) est configurée pour trouver des informations de marqueur d'image en tant que signaux de mesure et pour reconnaître une partie de bord (32a, 33a) de l'autre véhicule détecté (31, 32, 33, 34) par des combinaisons de bords longitudinaux et une mise en correspondance de motif de l'autre véhicule (31, 32, 33, 34) sur la base des images capturées, et
le radar à ondes radio (5) est configuré pour transmettre des ondes radio aux régions de détection (36, 38) dans la zone latérale avant et la zone latérale arrière du véhicule (30) pour recevoir des ondes réfléchies provenant d'objets dans les régions de détection (36, 38) en tant que signal de mesure, et pour trouver des informations de marqueur radar comprenant une distance relative, une direction et une taille dans une direction horizontale et la vitesse relative par rapport à ces objets dans les régions de détection (36, 38) dans la zone latérale avant et la zone latérale arrière du véhicule (30),
dans lequel le radar à ondes radio (5) est configuré pour reconnaître une partie de bord (32a, 33a) de l'autre véhicule détecté (31, 32, 33, 34) en rétrécissant un faisceau de transmission lorsque l'autre véhicule (31, 32, 33, 34) a été détecté dans les régions de détection (36, 38) et en déterminant l'intensité de réflexion d'onde radio pour l'autre véhicule détecté (31, 32, 33, 34), dans lequel
l'unité de réglage de région de présence d'objet (3) est configurée pour indiquer des informations de marqueur d'image détectées dans la région (37) à environ 360 degrés de la périphérie du véhicule (30) en tant que premier autre véhicule détecté (32) comprenant la partie de bord avant (32a) dans une première région de détection (37), et des informations de marqueur radar détectées dans la zone latérale avant (36) ou la zone latérale arrière (38) du véhicule (30) en tant que second autre véhicule détecté (33) comprenant la partie de bord arrière (33a) dans une seconde région de détection (38),
pour cartographier le premier et le second autre véhicule détecté (32, 33) dans un système de coordonnées référencé au véhicule (30) en utilisant des informations de portée et d'angle d'azimut à partir des informations de marqueur radar et des parties de bord avant et arrière (32a, 33a) des informations de marqueur d'image,
pour grouper le premier et le second autre véhicule détecté (32, 33) détectés à travers la première et la seconde région de détection (36, 38) en un seul autre véhicule détecté (34) comprenant la partie de bord avant (32a) et la partie de bord arrière (33a) en utilisant une prédiction de trajectoire selon chaque région de détection ;
cartographier des positions de la partie de bord avant (32a) et de la partie de bord arrière (33a) de l'autre véhicule détecté (31, 32, 33, 34) dans un diagramme de cartographie (41) comprenant le système de coordonnées référencé au véhicule (30), et
calculer la longueur de l'autre véhicule détecté (31, 32, 33, 34) sur la base d'une distance entre des coordonnées de la partie de bord avant (32a) et de la partie de bord arrière (33a) de l'autre véhicule détecté (31, 32, 33, 34) dans le diagramme de cartographie (41).

2. Dispositif de détection d'objet (1) selon la revendication 1, dans lequel l'unité de réglage de région de présence d'objet (3) est configurée pour changer une spécification ou un procédé d'estimation pour les régions de présence d'objet sur la base du fait que l'autre véhicule (31, 32, 33, 34) a été détecté ou non dans chaque région de détection (35, 36, 37, 38).

3. Dispositif de détection d'objet (1) selon la revendication 1, dans lequel, lors de la détection de l'autre véhicule (31, 32, 33, 34) dans au moins l'une des régions de détection (35, 36, 37, 38), l'unité de réglage de région de présence d'objet (3) est configurée pour spécifier ou estimer une région de l'une des régions de détection (35, 36, 37, 38) comprenant l'autre véhicule en tant qu'une des régions de présence d'objet.

4. Dispositif de détection d'objet (1) selon la revendication 3, dans lequel, lorsque l'autre véhicule entier est détecté à travers une pluralité de régions de détection (35, 36, 37, 38), l'unité de réglage de région de présence d'objet (3) est configurée pour spécifier ou estimer une région obtenue en regroupant des régions de présence d'objet dans des régions de détection respectives (35, 36, 37, 38) de la pluralité de régions de détection (35, 36, 37, 38) en tant qu'une des régions de présence d'objet.

5. Dispositif de détection d'objet (1) selon la revendication 1, dans lequel, lorsqu'une pluralité de parties d'extrémité de l'autre véhicule est détectée à travers une pluralité de régions de détection (35, 36, 37, 38) avec une région de non-détection prise en sandwich entre elles, l'unité de réglage de région de présence d'objet (3) est configurée pour spécifier ou estimer une région obtenue en regroupant des régions de présence d'objet dans les régions de détection respectives (35, 36, 37, 38) dans lesquelles les parties d'extrémité ont été détectées, et la région de non-détection présente entre elles, en tant qu'une des régions de présence d'objet, dans lequel une région de non-détection est une région où un objet ne peut pas être détecté par la pluralité de capteurs (4, 5, 6) montés sur le véhicule.

6. Dispositif de détection d'objet (1) selon la revendication 1, dans lequel, lorsqu'une partie d'extrémité de l'autre véhicule est détectée dans l'une des régions de détection (35, 36, 37, 38) et qu'une autre partie d'extrémité de l'autre véhicule n'est pas détectée dans les régions de détection (35, 36, 37, 38), l'unité de réglage de région de présence d'objet (3) est configurée pour spécifier ou estimer une région obtenue en regroupant une région de présence d'objet dans l'une des régions de détection (35, 36, 37, 38) dans laquelle la partie d'extrémité a été détectée, et une région de non-détection adjacente à cette région de présence d'objet, en tant qu'une des régions de présence d'objet, dans lequel une région de non-détection est une région où un objet ne peut pas être détecté par la pluralité de capteurs (4, 5, 6) montés sur le véhicule.

7. Système de commande de véhicule comprenant :
le dispositif de détection d'objet (1) selon la revendication 1 ; et
un dispositif de commande de déplacement configuré pour commander un état de déplacement du véhicule (30) sur la base d'une région de présence d'objet spécifiée ou estimée par le dispositif de détection d'objet (1).

8. Système de commande de véhicule selon la revendication 7, dans lequel le dispositif de commande de déplacement est configuré pour commander un état de déplacement du véhicule (30) de manière à guider le véhicule (30) devant ou derrière la région de présence d'objet pendant que le véhicule (30) se déplace.

9. Procédé de détection d'objet, comprenant :
l'acquisition d'informations d'environnement externe pour différentes régions de détection (35, 36, 37, 38) dans les environs d'un véhicule (30) en utilisant une pluralité de capteurs (4, 5, 6) montés sur le véhicule (30) ;
l'association de résultats de détection provenant d'une unité d'acquisition d'informations d'environnement externe (2) pour les différentes régions de détection (35, 36, 37, 38) ;
et la détermination d'une longueur d'un autre véhicule détecté dans les environs du véhicule (30), dans lequel la longueur de l'autre véhicule est déterminée en
reconnaissant une partie de bord avant (32a) et une partie de bord arrière (33a) de l'autre véhicule (31, 32, 33, 34) sur la base de signaux de mesure de la pluralité de capteurs (4, 5, 6), dans lequel la pluralité de capteurs (4, 5, 6) comprennent une caméra (4) fixée à l'avant du véhicule (30) pour détecter une région (35) à l'avant du véhicule (30), une pluralité de caméras grand angle (4) fixées à l'avant, à l'arrière, à gauche et à droite du véhicule (30) pour détecter une région (37) à environ 360 degrés de la périphérie du véhicule (30), et un radar à ondes radio (5) fixé à chacune des parties d'extrémité avant, arrière, gauche et droite du véhicule (30) pour détecter des régions (36, 38) dans une zone latérale avant et une zone latérale arrière du véhicule (30), dans lequel
chaque caméra (4) est configurée pour trouver des informations de marqueur d'image en tant que signaux de mesure et pour reconnaître une partie de bord (32a, 33a) de l'autre véhicule détecté (31, 32, 33, 34) par des combinaisons de bords longitudinaux et une mise en correspondance de motif de l'autre véhicule (31, 32, 33, 34) sur la base d'images capturées, et
le radar à ondes radio (5) est configuré pour transmettre des ondes radio aux régions de détection (36, 38) dans la zone latérale avant et la zone latérale arrière du véhicule (30) pour recevoir des ondes réfléchies provenant d'objets dans les régions de détection (36, 38) en tant que signal de mesure, et pour trouver des informations de marqueur radar comprenant une distance relative, une direction et une taille dans une direction horizontale et la vitesse relative par rapport à ces objets dans les régions de détection (36, 38) dans la zone latérale avant et la zone latérale arrière du véhicule (30),
dans lequel le radar à ondes radio (5) est configuré pour reconnaître une partie de bord (32a, 33a) de l'autre véhicule détecté (31, 32, 33, 34) en rétrécissant un faisceau de transmission lorsque l'autre véhicule (31, 32, 33, 34) a été détecté dans les régions de détection (36, 38) et en déterminant l'intensité de réflexion d'onde radio pour l'autre véhicule détecté (31, 32, 33, 34), dans lequel
des informations de marqueur d'image détectées dans la région (37) à environ 360 degrés de la périphérie du véhicule (30) sont indiquées en tant que premier autre véhicule détecté (32) comprenant la partie de bord avant (32a) dans une première région de détection (37), et des informations de marqueur radar détectées dans la zone latérale avant (36) ou la zone latérale arrière (38) du véhicule (30) sont indiquées en tant que second autre véhicule détecté (33) comprenant la partie de bord arrière (33a) dans une seconde région de détection (38),
le premier et le second autre véhicule détecté (32, 33) sont cartographiés dans un système de coordonnées référencé au véhicule (30) en utilisant des informations de portée et d'angle d'azimut à partir des informations de marqueur radar et des parties de bord avant et arrière (32a, 33a) des informations de marqueur d'image,
le premier et le second autre véhicule détecté (32, 33) détectés à travers la première et la seconde région de détection (36, 38) sont groupés en un seul autre véhicule détecté (34) comprenant la partie de bord avant (32a) et la partie de bord arrière (33a) en utilisant une prédiction de trajectoire selon chaque région de détection ;
cartographier des positions de la partie de bord avant (32a) et de la partie de bord arrière (33a) de l'autre véhicule (31, 32, 33, 34) dans un diagramme de cartographie (41) comprenant un système de coordonnées référencé au véhicule (30), et
calculer la longueur de l'autre véhicule (31, 32, 33, 34) sur la base d'une distance entre des coordonnées de la partie de bord avant (32a) et de la partie de bord arrière (33a) de l'autre véhicule (31, 32, 33, 34) dans le diagramme de cartographie (41).
